# EUROPEAN PATENT SPECIFICATION

(11) **EP 2 760 293 B1**
(45) Date of publication and mention of the grant of the patent: **29.07.2015**
(21) Application number: 12773466.3
(22) Date of filing: 01.10.2012
(51) Int. Cl.: A23G 3/28, A23L 1/27, B41M 1/26

(54) **SYSTEM AND METHOD FOR PRINTING ON CHEWING GUM**
SYSTEM UND VERFAHREN ZUM DRUCKEN AUF KAUGUMMI
SYSTÈME ET PROCÉDÉ POUR L'IMPRESSION SUR UNE GOMME À MÂCHER

(30) Priority: 30.09.2011 US 201161541428 P
(43) Date of publication of application: 06.08.2014
(73) Proprietor: Intercontinental Great Brands LLC, East Hanover, NJ 07936 (US)
(72) Inventor: DEGADY, Marc, Northfield, IL 60093 (US)
(74) Representative: Wilson Gunn
(86) International application number: PCT/US2012/058267
(87) International publication number: WO 2013/049800

(56) References cited:
- FR-A1- 2 304 297
- GB-A- 1 497 507
- US-A- 3 644 169

## Description

### FIELD

This disclosure relates generally to a system and method for applying print to a chewing gum composition, and more particularly to a system and method for applying print to a chewing gum composition with a formed surface.

### BACKGROUND

Printing indicia designs on chewing gum have enjoyed great popularity, but many of the printing methods do not provide an adequate combination of desirable print qualities including high print density, light tone speckle, consistency, and high output. Studies show that print quality of indicia appeals to consumers and the higher the quality of the printing, the greater will be the appeal.

Surface topography and the characteristics of a chewing gum are directly related to the printing quality. Printing directly onto a rough surface increases the chances of variability. For example, some chewing gums conventionally use a series of rollers and a non-stick powdered agent. While such agents reduce tackiness of the substrate, ink deposited over such a surface has been found to result in poor printing quality.

There remains a need in the art for improved methods of surface preparation for printing indicia on a chewing gum.

### SUMMARY

A method for applying print to at least one chewing gum surface, the method including forming a chewing gum composition into at least one chewing gum sheet having at least one printable surface, the chewing gum sheet having a desirable thickness, providing a print roller, transporting the at least one chewing gum sheet towards the print roller via a transporting surface, providing a gap between the print roller and the transporting surface, the thickness of the at least one chewing gum sheet being greater than a height of the gap, moving the at least one chewing gum sheet through the gap, printing indicia on the chewing gum sheet via the print roller during the moving of the at least one chewing gum sheet through the gap, and compressing the at least one chewing gum sheet during the moving of the at least one chewing gum sheet through the gap, the compressing occurring simultaneously with the printing.

A system for applying print to at least one chewing gum surface, the system comprising at least one forming device configured to form a chewing gum composition into at least one chewing gum sheet having a desirable thickness and at least one printable surface, a print roller configured to print indicia on the at least printable surface, a transporting surface configured to feed the at least one chewing gum sheet to the print roller, and a gap between the print roller and the transporting surface, the gap including a lesser height than the desirable thickness of the at least one chewing gum sheet on the transporting surface, wherein the lesser height allows the gap to compress the at least one chewing gum sheet simultaneously to printing of the indicia by the print roller.

### BRIEF DESCRIPTION OF THE DRAWINGS

The accompanying drawings incorporated in and forming a part of the specification embodies several aspects of the present invention and, together with the description, explain the principles of the invention. In the drawings:
FIG.1 is a schematic representation of a system for applying print to a chewing gum composition according to an embodiment of the present disclosure;
FIG. 1a is an enlarged elevation via of a chewing gum sheet traveling through the system of FIG. 1;
FIG. 2 is a partial and enlarged schematic representation of the system of FIG. 1;
FIG. 3 is another partial and enlarged schematic representation of the system of FIG.1;
FIG. 4a is a plan view of a chewing gum product producible by the system of FIG. 1; and
FIG. 4b is a plan view of another chewing gum product producible by the system of FIG. 1.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION

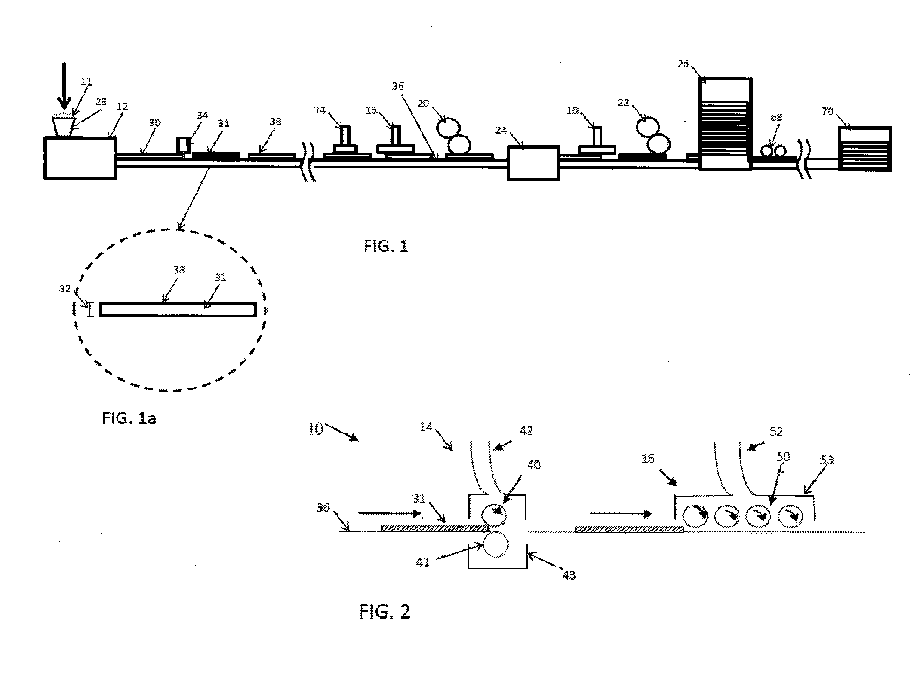

Referring to FIGS. 1-3a, a system 10 for printing on a chewing gum composition 11 is illustrated. As is schematically shown in FIG. 1, an exemplary embodiment of the system 10 generally includes a forming station 12, de-dusting device 14, first and second resurfacing devices 16, 18, a first and second printers 20, 22, a flipping device 24, and a buffering station 26. An exemplary method by which this system 10 forms, treats, and and prints on the gum composition 11 will be discussed hereinbelow.

The gum composition 11, which, in an exemplary embodiment, is a "finished" composition including all or substantially all necessary ingredients to a chewing gum, enters the system 10 via an inlet 28 in association with the forming station 12. This forming station 12 may be any mechanism(s) such as but not limited to an extruding device and/or rolling device that is capable of sizing the chewing gum composition 11 into a continuous sheet 30 including a desirable thickness 32 (as is best shown in FIG. 1a). In an exemplary embodiment, this thickness 32 is .3mm to 10mm.

As the continuous sheet 30 leaves the forming station 12, it is transported downstream to a cutting device 34 via a transporting surface 36. As shown in FIG. 1, the cutting device 34 cuts or separates the continuous gum sheet 30 into a plurality of sheets 31. The transporting surface 36 that transports the sheet 30 from the forming station 12 to the cutting device 34 may be any transporting device such as but not limited to a conveyor or roller/cylinder system capable of transporting the chewing gum sheet 30 (in continuous or non-continuous form) to the cutting device 34 and beyond. Though the exemplary embodiment of FIG. 1 shows the transporting surface 36 as a unitary surface that continuously extends from the forming station 12 to the buffering station 26, it should be appreciated that this surface 36 may be discontinuous, and therefore include breaks along any portion thereof The chewing gum sheet 30 or sheets 31 may traverse these breaks via various other transporting devices, such as but not limited to movable bins, robot picking devices, and/or system devices (such as de-dusting device 14) that traverse the break(s).

After leaving the cutting device 34, the chewing gum sheets 31 are transported along the transporting surface 36 to the de-dusting device 14. Each of these sheets includes a printable upper surface 38. Before describing an exemplary de-dusting device 14 in detail, a few points regarding dusting and de-dusting in general should be noted. In a conventional chewing gum forming and shaping procedures, a powdered anti-sticking agent is often applied to a gum composition (such as composition 11) in order to keep the composition from sticking to the various rollers that may be involved with forming/sizing of the gum composition into a chewing gum sheet (such as sheet 30). Exemplary rolling compounds include those known in the confectionery art including powdered saccharides, powdered sugar alcohols, talc, silicon dioxide, calcium carbonate, a combination thereof, and the like.

While the above discussed anti-sticking agent beneficially prevents the chewing gum composition from sticking to forming/sizing rollers, application of this anti-sticking agent may also result in agglomeration of rolling compound on a surface of the sheet(s). Such agglomerations may create large morphological irregularities on the surface of the sheet(s), resulting in printing difficulties, wherein print indicia is applied to the flaking and removable powdered anti-sticking agent, not the surface of the sheets.

In order to counteract the above discussed printing difficulties, the system 10 employs at least one de-dusting device 14. As is best shown in FIG. 2, the de-dusting device 14 includes an upper de-dusting brushes 40 and a lower de-dusting brushes 41, as well a first vacuum unit 42 enclosed within a fume hood 43. While only one upper and one lower brush are shown in the exemplary embodiment of FIG. 2, it should be appreciated that any desirable number of upper or lower brushes may be used.

The brush or brushes 40, 41 may generally include a material and characteristics that are desirable relative to properties of the chewing gum surface 38 to be de-dusted. In an exemplary embodiment, the rotating brushes 40, 41 contact the surface 38 and surface opposing surface 38, and then bend and brush off the powdered anti-stick agent from both sides. The brushes 40, 41 may include soft hairs such that they do not leave any marks on the surface. As the brushes 40, 41 lightly contact the sheets 31 and remove the powder from both surface, the vacuum unit 42 collects and removes powder from the area surrounding these surfaces. The de-dusting brushes 40, 41 may be powered by a motor mounted on a frame, which turns the brushes 40, 41 in a rotating direction opposite each other and the direction of travel of the sheets 31.

The brush or brushes 40, 41 are generally made of an appropriate food handling material to allow sufficient surface contact with minimal roughening of the chewing gum surfaces. The brushes may be produced from food grade silicone, rubber, natural elastomer or synthetic material suitable for use with food products. Such materials are particularly advantageous in terms of proper health and hygiene. Further, such materials can be easily cleaned by any appropriate means. In an exemplary embodiment, the brushes 40, 41 may be offset in the hood 43 above and below the sheets 31 to allow greater exposure to the sheets 31. In another embodiment, a plurality of de-dusting brushes 40, 41 are arranged in a series above and below the sheet. As shown in FIG. 2, there is a break in the transporting surface 36 at the de-dusting device 14, with this break allowing the lower brush or brushes 41 to contact the relative bottom surfaces of the sheets 31. Alternatively, the de-dusting device may only include a brush or brushes 40 positioned to de-dust the relatively upper surface 38 of the gum sheets. In such an embodiment, the transporting surface 36 may extend across the break shown in Figure 2, and a second de-dusting device may be positioned downstream of the flipping device 24. A second de-dusting device positioned in this manner would be capable of de-dusting a surface of each sheet 31 that opposes the surface 38, with this second de-dusting of the opposing surface occurring after the sheets 31 are flipped at the flipping device 24.

Silicone brush compositions in the durometer range of about Shore A hardness 10 through 90 are considered suitable for the de-dusting device 14. Silicone compositions below 10 may also be useful although the silicone elastomer may tend toward stickiness at this lower durometer range. Silicone compositions above 90 may also be useful, although some flexibility may be sacrificed. A wide range of possible silicone elastomers can be used in the brushes of the method to obtain suitable results for de-dusting.

The de-dusting device 14 may also further include an air jet (not shown) that directs air onto the surface to further loosen rolling powdered anti-stick agent and loose particles. In an exemplary embodiment, a plurality of air jets can be arranged at various angles to the plane of the sheets 31. In another embodiment, the de-dusting device 14 may simply take the form of air knives (not shown) configured to blast anti-sticking agent from the surfaces of the sheets 31.

Following de-dusting at the de-dusting device 14, the chewing gum sheets 31 are transported along the transporting surface 36 to the first resurfacing device 16. The resurfacing device is employed to reduce topological variations in the surface 38 of the sheets 31, better preparing these surfaces 38 for contact printing. As used herein, "resurfacing" may be defined as reducing topological variations on a surface of the gum sheets 31, including but is not limited to removal of a portion or portions of gum material from the surfaces 38 of the sheets 31, and/or removal of dust remaining on the surfaces 38 following de-dusting at the de-dusting device 14.

Referring again to FIG. 2, the first resurfacing device 16 includes a series of resurfacing brushes 50 and a second vacuum unit 52 enclosed within a fume hood 53. The brushes 50 are powered by a motor mounted on the frame, which turns the brushes 50 in a rotating direction opposite to the direction of travel of the sheets 31. During operation of the resurfacing device 16, the brushes 50 contact the chewing gum surface 38.

The resurfacing brushes 50 may take the form of various shapes and materials that are appropriate food handling. While four brushes are shown in the exemplary embodiment of FIG. 2, it should be appreciated that any number of brushes greater or lesser than 4 may be used. The materials and characteristics of the brushes 50 are generally matched to the desired surface topography of the gum surface 38. Similar materials to those described with reference to the brush(s) 40 of the de-dusting apparatus 14 can be used on the resurfacing brushes 50, including brushes comprising of one or more materials suitable for use with food products, such as silicone, rubber, natural elastomer or synthetic materials.

In an exemplary embodiment, the resurfacing brushes 50 are arranged in series, perhaps with a more course brush being disposed at an upstream end of the device 16 and a less course brush (for smoother sanding) being disposed at the downstream end of the device 16. In an exemplary embodiment, the resurfacing brushes 50 may consist of a material having a hardness in the durometer range of about Shore A hardness 10 through 90.

As described with reference to the de-dusting device 14, the resurfacing device 16 may also further include an air jet (not shown) that directs air onto the surface to further loosen rolling powdered anti-stick agent and loose particles. In an exemplary embodiment, a plurality of air jets can be arranged at various angles to the plane of the substrate. In another embodiment, the resurfacing device 16 may also simply take the form of air knives (not shown) configured to blast anti-sticking agent from the surface 38 of the sheets 31.

In another embodiment, the resurfacing device 16 may include a rotary sander (not shown) upon which an abrasive material contacts the gum surface 38. The abrasive sheet of the sander can be produced from silicone, rubber, natural elastomer or synthetic material suitable for use with food products as described herein.

It is understood that various other de-dusting and resurfacing devices other than the devices described above can be used to achieve the desired de-dusting and resurfacing employed for preparing the chewing gum surface 38 for printing. For example, devices such as those which are adapted for scrubbing, sanding, scarifying, and paint removal can be modified for resurfacing. Specific examples include, but are not limited to disks to grind surfaces, polypropylene scrub brushes, nylon scrub brushes, soft, medium and heavy duty wire brushes, non-sparking wire brushes, carbide scrapers, inner and outer coarse grind blades, inner and outer smooth grind blades, pad drivers with scrub pads, and other grit disks.

In an embodiment, the average surface roughness of a printable surface of a chewing gum is less than about 19 micrometers, and more specifically is less than 15 micrometers, and even more specifically less than 12 micrometers.

In another embodiment, the average gloss of a printable surface of a chewing gum product is greater than about 4 gloss units, measured at 85 degrees, and more specifically is greater than 5 gloss units, and even more specifically greater than 5.5 gloss units.

In a further embodiment, the visual analytics measurement of a printable surface of a chewing gum product is less than about 75%, and more specifically less than 60%, and even more specifically less than 45%.

In yet another embodiment, the chewing gum surface has substantially no particulates, specifically no particulates such as rolling compound, and the like.

Following resurfacing at the resurfacing device 16, the printable surface 38 is in condition for printing at the first printer 20. Before describing an exemplary printer 22 in detail, a few points regarding printing on chewing gum surfaces in general should be noted.

A number of different techniques can be used for printing a chewing gum surface. These techniques can be separated into two categories, "contact printing" and "noncontact printing." As used herein, "contact printing" includes gravure, flexographic, lithographic, screen printing, pad printing, and the like. "Noncontact printing" includes inkjet, drop-on-demand, electrographic, electrophoretic, electrophotographic, and the like.

Depending on the application, chewing gum composition, and desired print volume, different contact printing techniques will be better suited for the job. Gravure printing is useful for long run, high quality prints that produce a sharp image. Gravure printing involves engraving an image onto a gravure cylinder to create a pattern of depressions or cells. In comparison to letterpress or lithographic printing processes, gravure transfers ink from the cylinder depressions to a substrate, whereas letterpress or lithographic printing processes uses raised and flat printing surfaces, respectively. Offset lithography is another contact printing technique that is based on the repulsion of oil and water where an inked image is transferred (or "offset") first to a rubber blanket, then to the printing surface. In comparison to offset lithography and other types of contact printing, gravure is capable of transferring more ink to the substrate, resulting in a sharper image.

In comparison to noncontact printing, such as inkjet, gravure has many advantages. For example, gravure can apply less ink than ink jet, which provides a cost savings. Gravure inks have better binders to hold a colorant on a substrate surface. Binders increase the viscosity of the ink when a small amount of solvent is removed, which fix the colorant to the substrate. This produces a color with a higher intensity, a greater sharpness of boundaries, and better resistance to smearing when wetted. In comparison, inkjet printing is limited to inks that have a lower viscosity for jetting through a nozzle. This in turn limits the selection of jettable binders and the ability for a colorant to adhere to a substrate. As a result, gravure printing provides a better printed product.

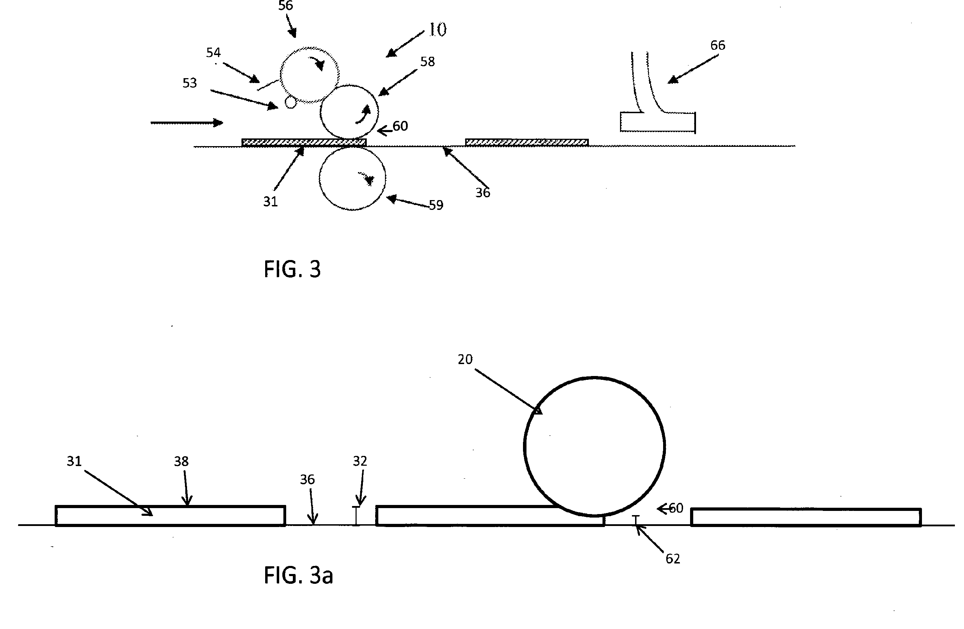

Gravure printing on a chewing gum can be accomplished by direct gravure, indirect gravure also known as "offset gravure", or a combination of both. Offset gravure occurs when a gravure cylinder transfers an ink to an intermediate roller, which then transfers the ink to the chewing gum substrate. FIG. 3, which will be described in detail below, provides an exemplary embodiment of an offset gravure printer. Direct gravure occurs when a gravure cylinder directly contacts a chewing gum substrate which then transfers the ink. For a non-uniform edible substrate, offset gravure generally provides an advantage over direct gravure in that the intermediate roller allows for a better contact with a non-uniform surface. That being said, direct gravure printing may be used and is contemplated by this disclosure.

As will be described with reference to an exemplary embodiment in greater detail below, gravure printing can be done to one side or both sides of the chewing gum sheet, by either direct or offset gravure printing, either simultaneously or one side at a time. Alternatively, both sides can be printed by two direct gravure printings or two offset gravure printings.

A desired image is prepared and transmitted to an engraving apparatus to form into the surface of a gravure cylinder. The gravure cylinder typically comprises a cylinder base or an underlying structure that supports an engraved image-carrying layer. In a typical gravure cylinder, metal cladding is engraved with an image and is supported by a steel or aluminum core.

The image-carrying layer comprises a pattern of depressions or cells. The unengraved portions of the image-carrying layer are known collectively as the land area. The land area is at a common surface level such that when an ink is applied to the cylinder and fills or floods the cells, excess liquid is removed from the land areas by wiping a doctor blade across the cylinder surface. The unetched areas of the cylinder represent the non-image or unprinted areas.

The depth and size of the cells are two of the parameters that determine the amount of liquid which is transferred to the substrate. By controlling the depth and size of the cells, and the location of the cells on the surface, a precise control of the volume of the ink to be transferred and the location of the ink to be transferred to a substrate can be achieved. While a higher distribution of cells in a defined area can be beneficial for utilizing less ink, a tradeoff is that a substrate may require a smoother surface for an effective and even transfer of the ink. For example, a cylinder engraved with 300 lines per inch requires less ink than engraving at 175 lines per inch, but requires a smoother substrate surface. Additionally, the distribution of the cells can determine the lightness and darkness of a particular image area.

In an exemplary embodiment, the resolution of the gravure cylinder is between 100 to 500 lines per inch, and more specifically is between 150 and 400 lines per inch, and even more specifically between 175 lines per inch and 300 lines per inch. In a specific embodiment, the resolution of the gravure cylinder is 300 lines per inch.

Referring now to FIG. 3, an exemplary embodiment of an offset gravure printer is illustrated. This offset gravure printer is the first printer 20 referenced above and shown in FIG. 1. The printer 20 comprises an ink fountain 53, a doctor blade 54, a gravure roller 56 and an intermediate roller 58. As used herein, the term "print roller" refers to any roller that directly applies ink directly to the gum sheets 31. Accordingly, and as will be discussed in greater detail below, the print roller in the exemplary embodiment of FIG. 3 is intermediate roller 58.

In this exemplary embodiment, the printer 20 also includes an optional impression roller 59 disposed under the transporting surface 36 (which is a conveyor belt/surface in this exemplary embodiment). The ink fountain 53 applies an ink to the gravure roller 56. As the gravure roller 56 rotates, the ink is transferred from the ink fountain 53 to the gravure roller 56, which then further transfers the ink to the intermediate roller 58. The intermediate roller 58 then directly transfers the ink onto the chewing gum surfaces 38 of the sheets 31 to create indicia thereon.

The doctor blade 54, acting as a squeegee, scrapes the gravure roller 56 before it makes contact with the intermediate roller 58 and removes ink from the non-recessed areas. The doctor blade 54 is a long, thin strip of metal, which is generally mounted parallel to the axis of either print roller (in this case the gravure roller 56), with the thin edge of the strip close to the surface of the cylinder. In operation, the doctor blade 54 regulates the amount of ink ultimately transferred from the printing surface of the roller 56 to the gum surfaces 38 by wiping off the surplus ink. The doctor blade 54 is set at an optimum angle, called a contact angle, to reduce blade and cylinder wear. The force or pressure with which the blade contacts the roller is as minimal as possible in order to reduce the blade and roller wear. The angle can also be varied to correct roller defects and ink problems. The distance between the blade 54 and the transfer point of ink from the gravure roller 56 and intermediate roller 58 (and ultimately the printing gap) is set to be small enough to prevent drying of ink in the roller cells.

As is alluded to above, the chewing gum sheets 31 are run through a gap 60 defined by the printing roller (in the indirect printing embodiment shown in FIG. 3 this roller is the intermediate roller 58) and transportation surface 36 (e.g. the conveyor shown in FIG. 3). As the sheets 31 are transferred through this gap 60, pressure transfers the ink from the smooth rubber surface of the intermediate roller 58 to the surface 38 of the sheets 31. The intermediate roller 58 is generally a smooth, rubber surface with no depressions that provides a medium for transferring ink from the gravure roller 56 to the surfaces 38 of the sheets 31. The intermediate roller 58 can be made of a metal core and a rubber cladding, silicone, rubber, natural elastomer or other synthetic materials suitable for use with food products.

It is important to note that the chewing gum sheets 31 are resiliently compressible, and the sheets 31 are flattened or compressed by the intermediate roller 56 to a desired degree as the sheets 31 pass through the gap 60. The degree of compression can be adjusted for example, by changing height of the printing gap 60 or by increasing the thickness of the sheets 31. Simultaneously or immediately after compression of the sheets 31 passing through the gap 60, the surfaces 38 of the sheets 31 are contacted by the impregnating print fluid.

As is best shown in in FIG. 3a, the gap 60 in an exemplary embodiment is desirably adjusted to include a height 62 that is less than the thickness 32 of the sheets 31 prior to printing. This lesser height 62 of the gap 60 relative to the thickness 32 of the sheets 31 creates a squeezing or compression of the sheets 31 (as discussed above) as the sheets 31 pass though the gap 60 and receive the impregnating print fluid.

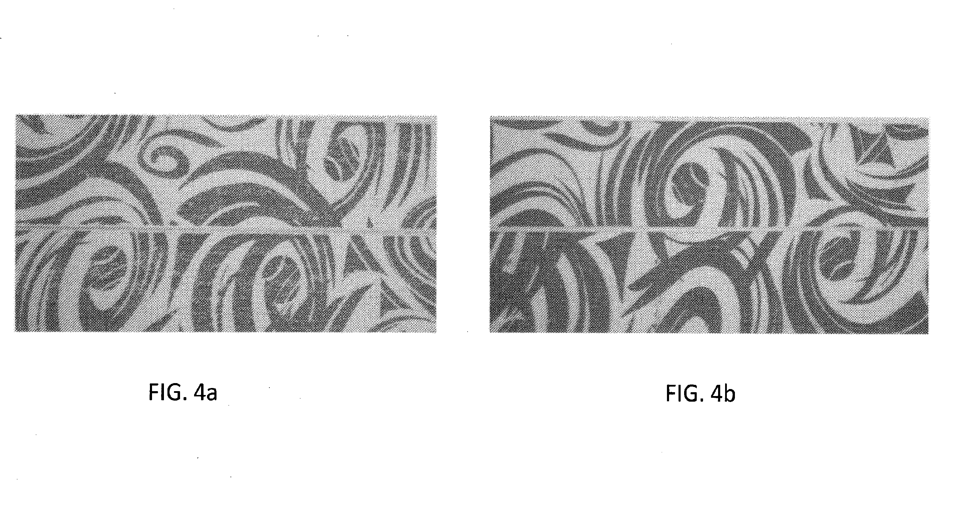

As shown in FIGS. 4a and 4b, sheets that are compressed while in the print gap 60 experience improved results. Indeed, the pieces of printed gum sheet 31 shown in FIG. 4a included a thickness that was the same or substantially the same as the height of the gap 60 through which these pieces of gum sheet passed. On the other hand, the pieces of printed gum sheet 31 shown in FIG. 4b included a double thickness relative to those shown in FIG. 4a, and were passed through a gap 60 with the same height as those shown in FIG. 4a. Due to this relative double thickness, the pieces of printed gum sheet 31 experienced a compression that resulted in the better print quality shown in Figure 4b.

While not wishing to be bound by theory, it is believed that compression of the gum sheets 31 during printing causes sheet expansion, with this expansion creating a suction force that acts to draw the print fluid into the substrate. Thus, the degree of impregnation can be controlled by such factors as the extent of compression of the sheets 31 during printing. Notably, improvement in print quality as a result of intentional compression was an unexpected finding, as it would seem that print quality would be negatively impacted by compression caused by the print roller.

In an exemplary embodiment, resiliently compressible chewing gum with an initial thickness enters into a printing gap 60, the gum is compressed, and then recovers to at least 80% of its initial thickness, more specifically 90% of its initial thickness, and even more specifically 95% of its initial thickness. As shown in the exemplary embodiment of FIG. 3a, the sheets 31 may even recover up to 100% of their initial thickness. In another embodiment, the printing nip contains a gap having a height wherein that height is less than 90% of the thickness of the gum, and more specifically the height is less 80% of the thickness of the gum, and even more specifically the height is 40% to 70% of the thickness of the gum. In a specific embodiment, the thickness of the gum is 3.1 mm, and the height of the gap is approximately 67% of the thickness of the gum.

Though FIG. 3 depicts gravure and intermediate rollers 56, 58 set above the transporting surface 36 such that the printing occurs on the topside, it should be appreciated that the gravure and intermediate rollers 56, 58 may alternatively be set below the impression roller such that printing occurs on the bottom side (provided there is another roller, such as the impression roller, or other surface present to define the top of the gap). One advantage of topside printing is that a conveyor belt can carry the printed image without contacting the image side of the sheets 31.

In an alternate embodiment to that shown in the Figures, printing can occur by direct gravure printing. Direct gravure printing contains many of the same components as described in offset gravure printing, with one of the differences being that ink is transferred directly from the gravure roller to the substrate, and the transporting surface 36 and the gravure roller define the print gap. Accordingly, in this embodiment, the print roller would be the gravure roller.

After printing, the sheets 31 may optionally be transported to a finishing apparatus 66. This optional finishing apparatus 66 comprises a dryer. The dryer is generally provided with a blower, an air delivery duct, and nozzles that deliver air to the printed surfaces 38 of the sheets 31. High impingement air velocity is generally avoided in order to reduce a blurring of the ink as the ink is drying.

After the ink has dried, the printed sheets can then go on to additional printing stages. For additional printing stages, each sheet can be flipped and passed through the same printer to create a two-sided image. Alternatively, each sheet can pass through a series of additional printers to layer one or more additional tones or colors on the surface.

As shown in the exemplary embodiment of FIG. 1, the flipping device 24, which may be a picking robot arm and/or wheel, flips the chewing gum sheets 31 to expose a non-printed surface 38a that was previously contacting the transporting surface 36. The flipped sheets 31 are then transported to a second resurfacing device 18 and second printer 22, which resurface and print on the sheets 31 in a manner similar to resurfacing device 16 and printer 20.

After printing at the second printer 22, the sheets may enter the vertical buffer station 26, which accepts the sheets 31 such that they are vertically stored on trays in a manner that prevents printed surfaces from contacting each other. The sheets 31 may then remain in this buffer for a desirable amount of time necessary to allow the print indicia to dry, before being ejected and transported to downstream processing devices such as scoring rollers 68 and stacking trays 70. Notably with regards to drying of the sheets 31, it should be appreciated that the entire process discussed occurring via the system 10 may take place within a refrigerated room(s).

After the drying is complete and before packaging, the chewing gum can then receive additional rolling compound to prevent sticking between the sheets. In an embodiment, a small amount of rolling compound is placed on to each sheet and the sheets are then scored, stacked, and packaged.

The system may also optionally employ application of a polishing coating to the surface of the printed product, wherein the polish is selected from the group consisting of wax, glaze, shellac, glitter, or a combination thereof In a specific embodiment, the printed product is further processed by polishing with a wax or coated with a glaze. Exemplary waxes and glazes include shellac (confectioner's glaze), mixtures of mineral oil and wax (e.g., carnauba wax, candelilla wax, etc.), mixtures of Lycasin® and maltitol, and the like. After receiving the optional coating and polish/glaze, the chewing gum product can be packaged.

The chewing gum product can be packaged using techniques and equipment known in the art. For example bags, packaging tins, blister trays, clear wrappers and the like can be used. In an embodiment, a packaged product has indicia on an outer surface that is indicative of the chewing gum product contained in the package. In another embodiment, the packaged product is clear in order to allow the indicia from the printed chewing gum to be shown through the packaging.

Other printing apparatuses can be selected for particular applications. For example, a pair of press rollers can be employed. Alternatively, printing between a press roll and a conveyor belt, for example, can be employed. This method can provide a gap having a larger area relative to press rollers.

As another example, the printing apparatus can comprise a press roll and an arcuate pressure shoe adjacent thereto. The roll and shoe are positioned, during operation, to form a nip there between having a length five to ten times longer than the gap formed between two press rolls.

With regards to the ink used, it should be appreciated that a gravure ink generally comprises a pigment, a vehicle, and a binder. The vehicle is a liquid carrier, which can be an emulsion.

The pigment is an expensive part of the ink formulation, and requires specific properties to meet the demands of the printing properties, such as the pigments color strength, ease of dispersion, and gloss.

Colored pigments include both inorganic and organic pigments and also lakes and toners. Organic pigments can be of the azo type, indigoids, triphenylmethane, anthraquinones, and xanthine dyes, which are known as D&C and FD&C blues, browns, greens, oranges, reds and yellows. Inorganic pigments can consist of insoluble salts of certified dyes, which are referred to as lakes or iron oxides. Specific examples of pigments include barium lakes, calcium lakes, aluminum lakes, titanium dioxide, mica and iron oxides. A1 salts which may be used are, for example, Red 3 aluminum lake, Red 21 aluminum lake, Red 27 aluminum lake, Red 28 aluminum lake, Red 33 aluminum lake, Yellow 5 aluminum lake, Yellow 6 aluminum lake, Yellow 10 aluminum lake, Orange 5 aluminum lake, Blue 1 aluminum lake and combinations thereof In one embodment, the inorganic pigments include FD&C Red 40, Yellow 5, Yellow 6, Blue 1, and combinations thereof.

Pearlescent pigments can also be incorporated into the emulsions. Examples include natural pearlescent pigments, such as, for example, "pearl essence" (guanine/hypoxanthine mixed crystals from fish scales), "mother of pearl" (ground mussel shells), monocrystalline pearlescent pigments, such as, for example, bismuth oxychloride (BiOCl).

Additional pigments include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), and a combination thereof. In some embodiments, certified colors can include FD&C aluminum lakes, and a combination thereof

The liquid carrier selection is generally tied to the printing speed. A gravure ink needs to remain fluid during the printing process while the ink flows from the gravure cells onto the substrate. Further, after impression and transfer of the ink to the substrate, the liquid carrier needs to be rapidly removed during the drying cycle. Thus, the evaporation rate of the liquid carrier is generally geared to the length of time required to remove the excess ink by the doctor blade and the elimination point of the carrier.

The liquid carrier selection is also typically governed by the binder system employed, whether a direct or off-set gravure process will be used, the design of the gravure cylinder, the substrate, the desired end-use properties of the print, the pigment selected, flash point, dry time, process-ability, and various additional parameters discussed herein.

Exemplary carriers include ethyl, iso-propyl and n-propyl alcohols, acetone, ethyl, isopropyl and n-propyl acetates, methoxy and ethoxy propanols, aliphatic hydrocarbons, toluene, aliphatic hydrocarbon solvents, primarily aromatic, aliphatic and naphthenic hydrocarbons, alcohols, ketones, esters, ethers and halogenated compounds, and combinations thereof. Exemplary carriers include carriers having a high flash point greater than 29°C and a fast dry time. Specific exemplary carriers include glycerine and propylene glycol.

A binder resin adheres the pigment to the substrate being printed. The binder can be soluble or dispersable in the emulsion. Exemplary resins and mixtures thereof include rosin and modified rosins, such as calcium, magnesium and zinc metallic resinates; ester gum of rosin; maleic resins and esters; dimerized and polymerized rosins; rosin modified fumaric resins; shellac; asphalts; phenolic resins and rosin modified phenolic resins; alkyd resins; polystyrene resins and copolymers thereof; terpene alkylated urea formaldehyde resins; alkylated urea formaldehyde resins; polyamide vinyl resins, such as polyurethane resins; polyimide resins; polyvinyl acetate and polyvinyl alcohol; ketone resins; acrylic resins, such as polyacrylic acid and polymethacrylic acid; epoxide resins; polyurethane resins; cellulosic resins, such as nitro- and ethyl-cellulose, ethyl cellulose, cellulose acetate butyrate, carboxymethyl cellulose, hydroxyethylcellulose, hydroxypropyl-cellulose, hydroxybutylmethylcellulose, and combinations thereof

Additional additives can be included in the ink formulation including extenders. Extenders help control the gloss levels and improve the lay characteristics in ink formulations having high binder/pigment ratios. Examples of extenders include china clay and calcium carbonate. Plasticizers can also be added in order to prevent the ink from drying in the cells of the gravure cylinder and to ensure satisfactory adhesion and flexibility on the substrate. Examples of plasticizers include esters, ethers, oils, and soft polymers.

Rewetting agents can also be employed to reduce screening which occurs when ink combines with dried ink in a cell. Examples of rewetting agents include butyl alcohol, glycerin, water, butyl alcohol, isopropyl alcohol, ammonium hydroxide, and mixtures thereof

Ink viscosity is another parameter that controls gravure print quality. Viscosity is generally a measure of an ink's resistance to flow. Too high of a viscosity results in an inadequate flow of ink from the cylinder cells and causes a phenomenon commonly known as "screening." Screening occurs when an ink dries quickly and clogs the gravure cell. Too low of a viscosity results in a "slur-out" or "halo" occurring on the trailing edge of the print, appearing as a thin film of ink that spreads beyond the limits of the design. This is because after the transfer of ink from the gravure cylinder to the substrate, the ink has more time to crawl or bleed on a substrate before the ink dries, resulting in a loss of sharpness.

Viscosity of an ink can change based on parameters such as temperature, agitation of the printer, rheological characteristics of the ink, printing speed, the evaporation rate of the carrier, cell shape, the doctor blade ink wiping characteristics, print design parameters, the nature of the substrate. With this in mind, the final strength and shade adjustments to a gravure ink is typically made when the proper viscosity and printing speed have been determined. Further, in general, ink penetration into the chewing gum is generally not desirable as this increases the amount of ink needed to obtain a desired print density.

With regards to the chewing gum compositions used, it should be appreciated that a chewing gum composition generally comprises a chewing gum base, sweeteners, flavorants, and other chewing gum ingredients.

In one embodiment, the chewing gum composition comprises a gum base; and a liquid flavor blend comprising i) a saccharide or sugar alcohol syrup, ii) a particulate saccharide or sugar alcohol, iii) an emulsifier, and iv) a flavorant, a fat, a food acid or salt thereof, a high intensity sweetener, a sensate, or a combination thereof. The chewing gum of this embodiment can further comprise a flavor modulator or potentiator, a coloring agent, a functional ingredient, a humectant, a hydrocolloid, or a combination thereof

The liquid flavor blend contains a combination of hydrophilic and lipophilic ingredients combined into a homogeneous mixture. The hydrophilic ingredients include sweetener syrup and humectants (e.g. corn syrup, maltitol syrup, glycerin, etc.) containing dissolved or wetted particulate sweetener (e.g., particulate sucrose, maltitol, mannitol, etc.) to increase the solids content or dry matter content of the syrup to increase viscosity. The hydrophilic ingredients are mixed with lipophilic ingredients, such as a fat, an emulsifier, flavorants, etc., to form the liquid flavor blend as a substantially homogeneous mixture.

The term "flavor" as used in "liquid flavor blend" is inclusive of aroma, taste, and mouthfeel. The term "liquid" can include solutions, suspensions, emulsions, semi-solids, cremes, gels, and the like, or a combination thereof. The liquid flavor blend can include a material that is fluid at room temperature and pressure, or which is a viscous liquid having a yield point.

Use of the liquid flavor blend in a chewing gum composition is believed to provide improved surface texture characteristics of the chewing gum substrate beneficial for printing purposes, such as smoothness.

The liquid flavor blend generally comprises a non-crystallizing type syrup such as a saccharide syrup or sugar alcohol syrup and a particulate saccharide or sugar alcohol. Sugar alcohol is also referred to herein as "polyol".

Suitable saccharide syrups include mono-saccharide, di-saccharide and polysaccharide syrups such as but not limited to, syrups prepared from sucrose (sugar), dextrose, maltose, dextrin, xylose, ribose, glucose, mannose, galactose, fructose (levulose), lactose, invert sugar, fructo oligo saccharide, partially hydrolyzed starch, high fructose corn syrup, polydextroses, or a combination thereof

Exemplary sugar alcohol syrups include a hydrogenated starch hydrolysate syrup, an isomaltulose syrup, a maltitol syrup, a sorbitol syrup, a polyglucitol syrup, or a combination thereof. In an embodiment, the sugar alcohol syrup is a hydrogenated starch hydrolysate syrup, a maltitol syrup, or a combination thereof In yet another embodiment, the sugar alcohol syrup is a maltitol syrup. Use of more than one sugar alcohol in a dissolved state helps to prohibit re-crystallization of other sugar alcohols present.

The saccharide syrup or sugar alcohol syrup can have about 60 to about 90 weight percent (wt%) dry matter with the remaining weight being water, specifically about 65 to about 85 wt%, and more specifically about 70 to about 75 wt%.

Suitable particulate saccharides include particulate mono-saccharides, di-saccharides and poly-saccharides such as but not limited to, sucrose (sugar), dextrose, maltose, dextrin, xylose, ribose, glucose, mannose, galactose, fructose (levulose), lactose, corn syrup solids, or a combination thereof.

The particulate sugar alcohol of the liquid flavor blend includes a crystalline sugar alcohol, an amorphous sugar alcohol, or a combination thereof The particulate sugar alcohol can be erythritol, galactitol, isomalt, a hydrogenated starch hydrolysate, lactitol, maltitol, mannitol, polyglycitol, sorbitol, xylitol, or a combination thereof In an embodiment, the particulate sugar alcohol is erythritol, maltitol, mannitol, sorbitol, xylitol, or a combination thereof. In an embodiment, the particulate sugar alcohol is maltitol, mannitol, sorbitol, or a combination thereof. In an embodiment, the particulate sugar alcohol is mannitol.

In an embodiment, the particulate sugar alcohol can be isomalt, a disaccharide alcohol. Isomalt can be prepared by hydrogenating isomaltulose. Products of the hydrogenation can include 6-O-α-D-glucopyranosyl-D-sorbitol (1,6-GPS); 1-O-α-D-glucopyranosyl-D-sorbitol (1,1-GPS); 1-O-α-D-glucopyranosyl-D-mannitol (1,1-GPM); 6-O-α-D-glucopyranosyl-D-mannitol (1,6-GPM); and mixtures thereof. Some commercially available isomalt materials include an almost equimolar mixture of 1,6-GPS, and 1,1-GPM. Other isomalt materials can include pure 1,6-GPS; 1,1-GPS; 1,6-GP; and 1,1-GPM. Still other isomalt materials can include mixtures of 1,6-GPS; 1,1-GPS; 1,6-GPM; and 1,1-GPM at any ratio.

As used herein "particulate sugar alcohol or saccharide of the liquid flavor blend" means a particulate sugar alcohol or particulate saccharide is used to prepare the liquid flavor blend. The particulate sugar alcohol/saccharide is typically dissolved and/or wetted in the syrup at temperatures between room temperature and 80°C, but below the boiling point of the hydrophilic portion of the liquid flavor blend. The particulate sugar alcohol/saccharide is used to increase the solids (dry matter) content of the syrup to a level of greater than 80 wt% based on the combination of the syrup and particulate, specifically greater than or equal to 82 wt%, more specifically greater than or equal to 85 wt%, and yet more specifically greater than or equal to 87 wt%.

The ratio of sugar alcohol syrup to particulate sugar alcohol for the liquid flavor blend can be selected such that the liquid flavor blend remains a liquid at the time of manufacture and during shelf life.

The amount of sugar alcohol syrup present in the liquid flavor blend is about 30 to about 75 wt% based on the total weight of the liquid flavor blend, specifically about 40 to about 65 wt% , more specifically about 45 to about 60 wt%, and yet more specifically about 50 to about 55 wt%.

The amount of particulate sugar alcohol present in the liquid flavor blend is about 5 to about 40 wt% based on the total weight of the liquid flavor blend, specifically about 10 to about 30 wt%, more specifically about 12 to about 27 wt%, yet more specifically about 15 to about 24 wt%, and still more specifically about 17 to about 22 wt%.

In an embodiment, the particulate saccharide or particulate sugar alcohol has a particle size of 20 micrometers or less average particle size.

Suitable emulsifiers for use in the liquid flavor blend can have an HLB value in the range of 1 to 22, specifically 11 to 17, and more specifically 4 to 8. Exemplary emulsifiers include distilled monoglycerides, lecithin, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate (glyceryl monostearate), glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate lecithin, ammonium phosphatide, sucrose esters of fatty acids, sucroglycerides, propane-1,2-diol esters of fatty acids, or a combination thereof

The emulsifier can be present in the liquid flavor blend in an amount of about 0.01 to about 15 wt% based on the total weight of the liquid flavor blend, specifically about 1.0 to about 7.0 wt%, more specifically about 2.5 to about 5.0 wt%, yet more specifically about 2.75 to about 3.5 wt%, and still yet more specifically about 3.0 to about 3.25 wt%. The liquid flavor blend used to prepare the chewing gum can comprise a flavorant. Exemplary flavorants (flavor, flavoring agent) that can be used include those artificial or natural flavors known in the art, for example synthetic flavor oils, natural flavoring aromatics and/or oils, oleoresins, extracts derived from plants, leaves, flowers, fruits, and the like, or a combination thereof. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, honey lemon, and the like, or a combination thereof Specific flavorants are mints such as peppermint, spearmint, artificial vanilla, cinnamon derivatives, and various fruit flavors.

Other types of flavorants include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin).

The flavorant can be used in liquid or solid form, specifically a liquid form for use in the liquid flavor blend. More than one flavorant can be used in the liquid flavor blend. The amount and type of flavorant used in the liquid flavor blend can be chosen based on the targeted release profile and flavor intensity desired. The liquid flavor blend generally comprises a flavorant in an amount of about 0 to about 20 wt% based on the total weight of the liquid flavor blend, specifically about 0.01 to about 17 wt%, and yet more specifically about 0.5 to about 12 wt%, still yet more specifically about 1.0 to about 8wt%, more specifically about 1.75 to about 5 wt%, more specifically about 2.5 to about 4.5 wt%, and even more specifically about 3.5 to about 4 wt%.

Exemplary fats for use in the liquid flavor blend include fats and oils of vegetable origin, animal origin, or a combination thereof. Suitable vegetable fats can include soybean, cottonseed, corn, almond, peanut, sunflower, rapeseed, olive, palm, palm kernel, illipe, shea, coconut, cocoa, cocoa butter, or a combination thereof. The forgoing vegetable fats can be hydrogenated to varying degrees as desired or separated by fractional crystallization. Suitable animal fats include dairy fats such as milk fat and butter. As used herein, the term "fat" refers to any lipid material and can be solid or liquid (e.g. oil). Specific fats include hydrogenated palm oil, hydrogenated palm kernel oil, hydrogenated soybean oil, hydrogenated peanut oil, hydrogenated cottonseed oil, or a combination thereof.

A fat can be present in the liquid flavor blend in an amount of about 2.5 to about 10 wt% based on the total weight of the liquid flavor blend, specifically about 5.0 to about 7.5, more specifically about 5.5 to about 7.0 wt%, and yet more specifically about 6.0 to about 6.75 wt%.

The liquid flavor blend may optionally further comprise a humectant. Exemplary humectants include glycerin, propylene glycol, polyethylene glycol, or a combination thereof. The humectant can be added to retard the loss of moisture and to retard crystallization of the particulate sweetener. The use of a humectant can increase the liquidity of the liquid flavor blend without adding moisture to the blend.

The humectant can be present in an amount of about of about 0.1 to about 15 wt% based on the total weight of the liquid flavor blend, specifically about 2.5 to about 12 wt%, more specifically about 4.0 to about 10 wt%, and yet more specifically about 5.0 to about 9.0 wt%.

The liquid flavor blend may comprise a food acid or salt thereof. Exemplary food acids and food acid salts for use in the liquid flavor blend include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and alkali metal salts thereof (e.g., sodium citrate dihydrate), or a combination thereof In an embodiment, the food acid is citric acid, malic acid, tartaric acid or a combination thereof

The liquid flavor blend may comprise a sensate. Exemplary sensates include cooling agents, warming agents, tingling agents, effervescent agents, or a combination thereof.

In one embodiment, the chewing gum comprises a gum base, a bulk sweetener, and a liquid flavor blend comprising i) a saccharide or sugar alcohol syrup, ii) a particulate saccharide or sugar alcohol, iii) an emulsifier, iv) a flavorant, v) a humectant, and vi) a high intensity sweetener.

The amount of liquid flavor blend present in the chewing gum composition can be about 1 to about 60 wt% based on the total weight of the chewing gum, specifically about 5 to about 50 wt%, more specifically about 8 to about 40, yet more specifically about 10 to about 30 wt%, and still yet more specifically about 12 to about 25 wt%.

The chewing gum, with or without the liquid flavor blend, may further comprise a bulk sweetener. Bulk sugar sweeteners generally include saccharides. Suitable sugar sweeteners include mono-saccharides, di-saccharides and poly-saccharides such as but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose corn syrup, or a combination thereof.

In an embodiment, the bulk sweetener comprises a sugar alcohol. The sugar alcohol can be erythritol, galactitol, isomalt, a hydrogenated starch hydrolysate, lactitol, maltitol, mannitol, polyglycitol, sorbitol, xylitol, and the like, or a combination thereof

The amount of bulk sweetener, when present in the chewing gum composition can be about 1 to about 85 wt% based on the total weight of the chewing gum, specifically about 10 to about 75 wt%, more specifically about 15 to about 65 wt%, yet more specifically about 25 to about 55 wt%, and yet more specifically about 35 to about 45 wt% (the forgoing amounts independent of any bulk sweetener used in the liquid flavor blend).

The chewing gum may further comprise an additional ingredient wherein the additional ingredient is a food acid or salt thereof, a high intensity sweetener, a sensate, a flavorant, a flavor modulator or potentiator, a coloring agent, a functional ingredient, a hydrocolloid, or a combination thereof The foregoing additional ingredients are in addition to the food acid or salt thereof, high intensity sweetener, sensate, flavorant, flavor modulator or potentiator, coloring agent, and/or functional ingredient which may be present in the liquid flavor blend.

The amount of additional food acid or salt thereof, additional flavorant, additional sensate, additional coloring agent, additional flavor modulator or potentiator, additional functional agent, or a combination thereof present in the chewing gum can be up to about 5.0 wt% for each ingredient based on the total weight of the chewing gum composition, specifically about 1.0 to about 4.0 wt%, and more specifically about 2.0 to about 3.0 wt%.

The moisture content of the chewing gum composition can be about 0.5 to about 10 wt% based on the total weight of the chewing gum, specifically about 1 to about 8 wt%, yet more specifically about 1.5 to about 5 wt%, and still yet more specifically about 2.5 to about 4 wt%. The water activity of the chewing gum composition can be about 0.1 to about 0.7, specifically about 0.2 to about 0.6, and more specifically, about 0.25 to about 0.5.

In an embodiment, the chewing gum comprises a gum base comprising an elastomer; a fat; an emulsifier, and optionally an additional gum base ingredient, wherein the additional gum base ingredient is a wax, a filler, an antioxidant, or a combination thereof.

As used herein, the term "gum base" refers to water insoluble material(s) and can include, but is not limited to, elastomers, bulking agents, waxes, elastomer solvents, emulsifiers, plasticizers, fillers, or a combination thereof.

The amount of gum base employed will vary greatly depending upon various factors such as the type of base used, the consistency of the chewing gum desired, and the other components used in the composition to make the final chewing gum. In general, the gum base will be present in amounts of about 5 to about 60 wt % based on the total weight of the chewing gum, specifically about 25 to about 50 wt %, more specifically about 30 to about 45 wt%, and yet more specifically about 35 to about 40 wt%.

Exemplary elastomers to be used in the chewing gum base include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, and the like, or a combination thereof. Synthetic elastomers such as butadiene-styrene copolymers, polyisobutylene, isobutyleneisoprene copolymers, polyethylene, a combination thereof, and the like, or a combination thereof are also useful. The gum base can include a non-toxic vinyl polymer, such as polyvinyl acetate and its partial hydrolysate, polyvinyl alcohol, or a combination thereof. When utilized, the molecular weight of the vinyl polymer can range from about 3,000 up to and including about 94,000. Additional useful polymers include: crosslinked polyvinyl pyrrolidone, polymethylmethacrylate; copolymers of lactic acid, polyhydroxyalkanoates, plasticized ethylcellulose, polyvinyl acetatephthalate, or a combination thereof.

Conventional additives can be included in the gum base in effective amounts such as plasticizers or softeners to provide a variety of desirable textures and consistency properties. Because of the low molecular weight of these components, the plasticizers and softeners are able to penetrate the fundamental structure of the gum base making it plastic and less viscous. Suitable plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerin, or a combination thereof. Some of these ingredients may be added at the time of gum base formation or added later during the production of the chewing gum composition.

Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, and the like, or a combination thereof, can also be incorporated into the gum base to obtain a variety of desirable textures and consistency properties.

When a wax is present in the gum base, it softens the polymeric elastomer mixture and improves the elasticity of the gum base. The waxes employed may have a melting point below about 60° C., and specifically between about 45° C and about 55° C. The low melting wax can be a paraffin wax. The wax can be present in the gum base in an amount of about 6 to about 10 wt%, and specifically about 7 to about 9.5wt% based on the total weight of the gum base.

In addition to the low melting point waxes, waxes having a higher melting point can be used in the gum base in amounts up to about 5wt% based on the total weight of the gum base. Such high melting waxes include beeswax, vegetable wax, candelilla wax, carnuba wax, most petroleum waxes, and the like, or a combination thereof

The chewing gum or gum base can optionally contain conventional elastomer solvents to aid in softening the elastomer base component, for example trepanned resins such as polymers of alpha-pinene or beta-pinene; methyl, glycerol or pentaerythritol esters of rosins or modified rosins and gums, such as hydrogenated, dimerized or polymerized rosins, or a combination thereof; the pentaerythritol ester of partially hydrogenated wood or gum rosin; the pentaerythritol ester of wood or gum rosin; the glycerol ester of wood rosin; the glycerol ester of partially dimerized wood or gum rosin; the glycerol ester of polymerized wood or gum rosin; the glycerol ester of tall oil rosin; the glycerol ester of wood or gum rosin; the partially hydrogenated wood or gum rosin; the partially hydrogenated methyl ester of wood or rosin; and the like; or a combination thereof. The elastomer solvent can be used in amounts of about 5 to about 75 wt % base on the total weight of the gum base, and specifically about 45 to about 70 wt %.

The gum base can include effective amounts of bulking agents such as mineral adjuvants, which can serve as fillers and textural agents. Suitable mineral adjuvants include calcium carbonate, magnesium carbonate, alumina, aluminum hydroxide, aluminum silicate, talc, tricalcium phosphate, tricalcium phosphate and the like, or a combination thereof These fillers or adjuvants can be used in the gum base in various amounts. Specifically the amount of filler, when used, can be present in an amount of greater than about 0 to about 60 wt % based on the total weight of the gum base, and more specifically from about 20 to about 30 wt %.

The chewing gum composition can be prepared using standard techniques and equipment. In an embodiment, the liquid flavor blend is added at the end of the chewing gum ingredients mixing process.

In one exemplary process, a gum base is heated to a temperature sufficiently high to soften the base without adversely affecting the physical and chemical make up of the base, which will vary depending upon the composition of the gum base used, and is readily determined by those skilled in the art without undue experimentation. For example, the gum base can be conventionally melted to about 60°C to about 160°C, or melted to about 150°C to about 175°C, for a period of time sufficient to render the base molten, e.g., about thirty minutes, just prior to being admixed incrementally with the remaining ingredients of the base such as the plasticizer, fillers, and softener to plasticize the blend as well as to modulate the hardness, viscoelasticity and formability of the base, the chewing gum ingredients are next blended with the gum base, with the liquid flavor blend being added at the end of the process. Mixing is continued until a uniform or homogeneous mixture of the chewing gum composition is obtained. Thereafter the chewing gum composition can be formed into a desired shape.

In another exemplary process, chewing gum ingredients are mixed with gum base, with the liquid flavor blend being added at the end of the process. Mixing is continued until a uniform or homogeneous mixture of the chewing gum composition is obtained. Thereafter the chewing gum composition can be formed into a desired shape. Within this embodiment, the gum base can be in the form of a pelletized gum base that can be softened at 40 to 50°C rather than melting at higher temperatures as in the prior embodiment.

The chewing gum composition can be prepared using a batch method or a continuous method or a combination thereof.

The processing equipment used to prepare the chewing gum composition can be monitored and/or controlled automatically. For example, the processing equipment can be coupled to a computerized system which allows the user to input certain and/or all of the operational parameters, including, e.g., feeding of the ingredients, mixing or processing the ingredients, conveying the ingredients. In an embodiment, the system can be coupled to batch processing equipment, continuous processing equipment, or both if both types are used. In an embodiment, changing the input parameters used to control the processing can create changes in the final composition, e.g., ingredient amount and type, etc. For example, the ingredient and/or processing temperatures and/or feed rates of the ingredients can be monitored and fed back to a central unit so that the operator can adjust as needed and/or in which the system can automatically adjust. After the ingredients have been mixed, the formation, processing into a particular shape and/or form can also be monitored and fed back for the operators input and/or automatic adjustment. An audible and/or visual alarm can also be implemented to signal the operator when the system detects a problem and/or a variation in one or more processing parameters.

The chewing gum composition can be formed using a variety of processes including an extrusion process, a coextrusion process, a triple extrusion process, a laminate process, a molding process, a compression process, a rolling and scoring process, a chain die process, a rotary die process, or a cut and wrap process.

Chewing gum compositions as described in US provisional application filed 9/30/11 entitled LIQUID FLAVOR BLENDS FOR CHEWING GUM, METHODS OF MAKING LIQUID FLAVOR BLENDS AND CHEWING GUM COMPOSITIONS THEREOF, Attorney docket no. CDS0346US2, can be used herein.

In an embodiment, the gum material is formed into a sheet for the conveyance in the printing process.

The chewing gum comprising printed indicia on the surface can be a chewing gum product in the form of a sheet, discrete chewing gum piece, or a set of chewing gum pieces. The set of chewing gum pieces, when placed adjacent to one another, can comprise printed indicia that make up an overall image or pattern across the collection of pieces.

Surface preparation and gravure printing quality can be measured using various analytical tools and methods.

A visual analytic measurement can identify and measure the visible white areas of a sample. Since rolling compound is a white residue, that white residue correlates to the visible white areas of a colored sample and a white pixel count. Software tools such as "posterize" and "threshold" in Adobe Photoshop measure the white pixel count as a percentage of the sample size to provide a visual analytic measurement to gauge the concentration of rolling compound on a chewing gum surface.

Surface roughness can be measured using a surface profilometer. A profilometer can also provide a three dimensional image of a surface. Gloss can be measured at different levels of surface treatment using a reflectometer such as BYK-Gardner micro-TRI-gloss. Printing quality can also be analyzed using methods such as described in A. Swan, "Realistic Paper Tests For Various Printing Processes", pp. 9-22 in Printing Technology, April 1969.

The features and advantages are more fully shown by the following examples which are provided for purposes of illustration, and are not to be construed as limiting the invention in any way.

### EXAMPLES

### Example 1. Chewing Gum Formulations

Four gum formulations were prepared. The characteristics of the gum are described in Table la and the formulations in Table 1b.

**Table 1a**

| **Gum Formulation** | **Visual Color and Gum Formulation** | **Liquid flavor blend Included?** |
|---|---|---|
| 1 | Red Fruit Flavor | Yes |
| 2 | Green Mint | No |
| 3 | White Mint | No |
| 4 | Blue Mint | Yes |

**Table 1b**

| **Ingredient** | **Formulation 1 Red Fruit Flavor** | **Formulation 4 Blue Mint** |
|---|---|---|
| | Wt % based on total weight of the chewing gum | |
| Gum base | 28.54 | 28.80 |
| Glycerin | - | 3.0 |
| Sugar alcohol powder | 51.745 | 48.86 |
| Color | 0.45 | 0.08 |
| Flavorant | 3.88 | 2.86 |
| High intensity sweetener | 3.48 | 3.88 |
| Hydrocolloid | - | 0.2 |
| **Liquid flavor blend** | 12.31 | 12.31 |
| Sugar alcohol syrup | 6.65 | 6.68 |
| Sugar alcohol | 2.62 | 2.62 |
| Glycerin | 1.0 | 1.0 |
| Fat | 0.8 | 0.8 |
| Emulsifier | 0.47 | 0.47 |
| Flavorant | 0.77 | 0.74 |
| Total (wt%) | 100 | 100 |

### Example 2. Gum Sheet Formation and Surface Preparation

Formulations 1 and 4 containing the liquid flavor blend were prepared by separately preparing the liquid flavor blend. The liquid flavor blend is prepared by melting the fat with the emulsifier. The sugar alcohol syrup and glycerin are warmed (_{~}65-80°C) and the sugar alcohol powder is dissolved in syrup mixture with mixing. The melted fat/emulsifier is added to the sweetener mixture and mixed until a homogeneous mixture is formed. The homogeneous mixture is cooled and the flavorant is added to the homogeneous mixture with mixing to form a liquid flavor blend. In a separate container, the gum base is melted using techniques known in the art. The bulk sweetener (sugar alcohol powder) is then added with mixing. The additional flavor and color are then added with mixing followed by the addition of high intensity sweeteners to form a chewing gum mixture. The chewing gum mixture is then mixed with the liquid flavor blend to form chewing gum compositions Red Fruit Flavor and Blue Mint.

Formulations 2 and 3 were prepared without a liquid flavor blend where the gum base is melted using techniques known in the art. Bulk sweeteners are then added with mixing. Flavor and color are added with mixing followed by the addition of high intensity sweeteners to form a chewing gum composition.

Each formulation was individually placed between rollers of a roller mill and formed into sheets having a thickness of 3.1 millimeters.

Prior to printing, the sheets were subjected to different levels of surface treatment. The surface treatment levels included no treatment, dedusting only, resurfacing only, and both dedusting and resurfacing.

For some samples, the gum sheets were placed on a conveyor and then went through a dedusting apparatus. The dedusting apparatus comprised of a rotating roller that contained flexible, spining brushes. Excess dust was then removed by a fume hood located over the rollers and a vacuum device to draw out any dust.

For other samples, the gum sheets were placed under a resurfacing apparatus. The resurfacing apparatus comprised a series of rotating rollers. The rollers contained flexible brushes that contacted the surface of the gum sheet. Excess dust was then removed by fume hood located over the rollers and a vacuum device to draw out any dust.

### Example 3. Analysis Of Surface Conditioning of Gum Substrates

Visual analytic measurements were made at different levels of surface treatment for the colored gum formulations 1, 2 and 4. All of the samples were measured to approximately the same selection size. Each sample was scanned on both sides using approximately the same rectangular section of gum sheet relative to the size of the sample excluding rough edges. A white pixel count was measured on the selected rectangular section by using "posterize" and "threshold" filter functions in Adobe Photoshop. The visual analytic measurements were calculated by measuring the white pixel count as a percentage of the sample size. The results are set forth below in Table 2.

Surface roughness was also measured at different levels of surface treatment using a surface profilometer (Veeco Dektak) on the gum formulations 1, 2 and 4. The profilometer provided a three dimensional image and an average surface roughness. The results are also set forth in Table 2, along with corresponding three dimensional images.

Gloss was also measured at different levels of surface treatment using a BYK-Gardner micro-TRI-gloss reflectometer at an 85° angle. The results are also set forth below in Table 2.

**Table 2**

| **Sample** | **Visual Color and Gum Formulation** | **Surface Treatment** | **Visual Analytics, Side A** | **Visual Analytics, Side B** | **Avg. Surface Roughness (µm)** | **Gloss (85°, gloss units)** |
|---|---|---|---|---|---|---|
| 1 | Red Fruit Flavor | None | 92.19 | 75.85 | 13.64 | 6.7 |
| 2 | Red Fruit Flavor | Dedusting Only | 67.07 | 60.56 | 7.76 | 12 |
| 3 | Red Fruit Flavor | Resurfacing Only | 35.92 | 40.85 | 8.66 | 9.6 |
| 4 | Red Fruit Flavor | Both Dedusting and Resurfacing | 39.22 | 40.28 | 9.25 & 10.96 | 8.5 |
| 5 | Green Mint | None | 86.63 | 84.05 | N/a | 4 |
| 6 | Green Mint | Dedusting Only | 7.77 | 10.87 | N/a | 4.3 |
| 7 | Green Mint | Resurfacing Only | 0.30 | 0.96 | N/a | 4.4 |
| 8 | Green Mint | Both Dedusting and Resurfacing | 10.43 | 8.22 | 19.06 | N/a |
| 9 | Blue Mint | None | 77.12 | 76.83 | N/a | 4.2,5 |
| 10 | Blue Mint | Dedusting Only | 18.31 | 21.21 | N/a | 6.2 |
| 11 | Blue Mint | Resurfacing Only | 20.80 | 25.22 | N/a | 6 |
| 12 | Blue Mint | Both Dedusting and Resurfacing | 31.52 | 6.98 | 11.62 | 5.5 |

Regarding the visual analytic measurements, the data generally indicates that surface treatment in the form of dedusting, resurfacing, or both, produces a lower amount of white areas as compared to samples that did not undergo surface treatment which correlates to a lower amount of rolling compound present on the printable surface.

Regarding average surface roughness, Samples 1-4 of Formulation 1 indicates that surface treatment resulted in a reduced surface roughness. In comparing the three different formulations that underwent dedusting and resurfacing, Samples 4, 8, and 12, the surface roughness for the formulations containing the liquid flavor blend, Formulations 1 and 4, were found to be smoother than the formulation that did not contain the liquid blend, Formulation 2.

Regarding the gloss angle measurements, the data generally indicates that surface treatment increased the gloss angle as compared to samples that did not undergo surface treatment. In comparing the three different formulations that underwent dedusting and resurfacing, Samples 4, 8, and 12, the samples containing the liquid flavor blend, Formulations 1 and 4, were found to have greater gloss measurements than Formulation 2.

### Example 4. Printing And Surface Treatment Of Chewing Gum

Formulations 1, 3, and 4 were sheeted and underwent different degrees of surface treatment prior to printing: no surface treatment, dedusting only, resurfacing only, both dedusting and resurfacing. Nine samples were printed.

Formulations 1,3, and 4 were then printed using an offset gravure printer set up as described in Example 6 and gravure ink as described in Example 5. Nine samples were printed, Samples 13-21, as described in Table 3.

Samples 17, 19, and 21 were printed with a second similar sheet underneath so as to simulate a reduced printing gap. As shown in Table 3, a double thickness level indicates that two sheets were sandwiched together and passed under the press nip, and a single thickness indicates that one sheet was passed under the press nip.

A visual inspection was assigned to the printed sheets from grade 1 (best) to grade 6 (worst), grading the amount of speckles in the ink and print density. The results are set forth below in Table 3.

**Table 3**

| **Sample** | **Ref. FIG.** | **Ink and Gum Formulation** | **Surface Treatment** | **Thickness Level** | **Amount of Speckles** | **Print Density** |
|---|---|---|---|---|---|---|
| 13 | 14 | Blue Ink/ Blue Mint | None | Single | 6 | 6 |
| 14 | 15 | Blue Ink/ Blue Mint | Dedusting Only | Single | 5 | 4 |
| 15 | 16 | Blue Ink/ Blue Mint | Resurfacing Only | Single | 4 | 4 |
| 16 | 17 | Blue Ink/ Blue Mint | Both Dedusting and Resurfacing | Single | 3 | 4 |
| 17 | 18 | Blue Ink/ Blue Mint | Both Dedusting and Resurfacing | Double | 2 | 2 |
| 18 | 19 | Red Ink/ White Mint | None | Single | 3 | 3 |
| 19 | 20 | Red Ink/ White Mint | None | Double | 2 | 2 |
| 20 | 21 | Red Ink/ Red Fruit Flavor | None | Single | 3 | 3 |
| 21 | 22 | Red Ink/ Red Fruit Flavor | None | Double | 2 | 2 |

For Formulation 1, the results of Samples 13-16 indicate that surface treatment improves the gravure printing quality.

In comparing the two samples that both underwent dedusting and resurfacing, the sample passing through the press nip with a second sheet underneath, Sample 17 resulted in a better quality print as compared to Samples 16. Similar conclusions were found in comparing Samples 19 to 18, and Samples 21 to 20.

### Example 5. Ink Formulation

Two gravure ink formulations were obtained: blue ink and orange-red ink. Both inks contained a blend of an aluminum lake pigments, binder, carrier and additional additives.

### Example 6. Gravure Printing Setup

An offset gravure printer was used, arranged for topside printing. The thickness of the chewing gum was approximately 3.1 mm. The press nip was set at approximately 2.8 mm. Thickness measurements after printing were generally 3.0 mm. Each printed sheet dried in approximately 4-5 seconds.

As used herein, the term "sheet" means a material that is thin in comparison to its length and breadth. Generally speaking, a sheet should exhibit a relatively flat planar configuration and be flexible to permit folding, rolling, stacking, and the like.

As used herein, the expression "chewing gum product" refers to an edible substrate having a surface. In an embodiment, the edible substrate includes, but is not limited to, a chewing gum sheet, a chewing gum stick, a center-filled chewing gum, a coated chewing gum, a chewing gum tablet, a chewing gum pellet, or combinations thereof. Additionally, the edible substrate can include trim material.

As used herein, the expression "indicia" refers to an abstract image, a concrete image, letters, text, logos, characters, words, symbols, pictures, or a combination thereof As used herein, the expression "printable surface" refers to a surface that is prepared and ready to be printed thereon.

As used herein, a "visual analytics measurement" refers to a method of measuring an amount of rolling compound on a printable surface according to a procedure as described in the Example section.

As used herein, the expression "resiliently compressible" refers to a property of a chewing gum that can be flattened by a compressive force and then expand within a relatively short period of time of having been flattened so as to be restored to a thickness substantially greater than the reduced thickness, if not substantially equal to its original thickness. Generally speaking, the sheet should be resiliently compressible to permit contact printing.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A method for applying print to at least one chewing gum surface, the method comprising:
forming a chewing gum composition into at least one chewing gum sheet having at least one printable surface, said chewing gum sheet having a desirable thickness;
providing a print roller;
transporting said at least one chewing gum sheet towards said print roller via a transporting surface;
providing a gap between said print roller and said transporting surface, said thickness of said at least one chewing gum sheet being greater than a height of said gap;
moving said at least one chewing gum sheet through said gap;
printing indicia on said chewing gum sheet via said print roller during said moving of said at least one chewing gum sheet through said gap; and
compressing said at least one chewing gum sheet during said moving of said at least one chewing gum sheet through said gap, said compressing occurring simultaneously with said printing.

2. The method of claim 1, further including:
dusting a chewing gum composition with a powdered anti-sticking agent upstream of said forming;
cutting said at least one chewing gum sheet into a plurality of chewing gum sheets each including said at least one printable surface;
transporting said plurality of chewing gum sheets in series to a de-dusting device disposed between said forming and said printing;
removing at least a substantial amount of said powdered anti sticking agent from said at least one printable surface of each of said plurality of sheets via said dedusting device;
transporting said plurality of chewing gum sheets in series to resurfacing device disposed between said de-dusting device and said printing;
resurfacing said at least one printable surface of each of said plurality of chewing gum sheets via said resurfacing device;
scoring said plurality of chewing gum sheets via a scoring device disposed downstream of said printing;
stacking each of said plurality of chewing gum sheets on individual trays; and
cutting at least one of said chewing gums sheets into chewing gum pieces for packaging of said chewing gum pieces downstream of said stacking;
wherein said resurfacing optionally includes reducing topological variations located on said at least one printable surface of each of said plurality of chewing gum sheets.

3. The method of claim 2, wherein said at least one printable surface of each of said plurality of chewing gum sheets is a first printable surface and an opposing second printable surface, said first surface being printed on at said printer, the method further including:
transporting said plurality of chewing gum sheets from said printer roller to a flipping device;
flipping each of said plurality of chewing gum sheets via said flipping device;
transporting said plurality of chewing gum sheets in series to a second resurfacing device;
resurfacing said second printable surface of each of said plurality of chewing gum sheets via said second resurfacing device;
transporting said plurality of chewing gum sheets to a second print roller; and
printing further indicia on at least a portion of said second printable surface of each of said plurality of chewing gum sheets at said second print roller.

4. The method of claim 3, further including:
transporting said plurality of chewing gum sheets from said second print roller; disrupting said transporting from said second print roller via a buffer device for a desirable amount of time;
allowing said indicia and said further indicia to dry via said disrupting; and
transporting said plurality of gum sheets from said buffer device to said scoring device after said desirable amount of time.

5. The method of claim 3, further including inspecting at least one of said first printable surface and said second printable surface for print quality on at least one of said plurality of sheets, and rejecting or accepting at least one of said plurality of sheets based on results of said inspecting.

6. The method of claim 1, further including adjusting said height of said gap to allow said thickness of said at least one chewing gum sheet to be greater than said height of said gap.

7. A system for applying print to at least one chewing gum surface, the system comprising:
at least one forming device configured to form a chewing gum composition into at least one chewing gum sheet having a desirable thickness and at least one printable surface;
a print roller configured to print indicia on said at least printable surface;
a transporting surface configured to feed said at least one chewing gum sheet to said print roller; and
a gap between said print roller and said transporting surface, said gap including a lesser height than said desirable thickness of said at least one chewing gum sheet on said transporting surface,
wherein said lesser height allows said gap to compress said at least one chewing gum sheet simultaneously to printing of said indicia by said print roller.

8. The method or system of claim 1 or claim 7, wherein said height of said gap is less than or equal to 90% of said thickness of said chewing gum sheet.

9. The method or system of claim 1 or claim 7, wherein said height of said gap is at least 40% of said thickness of said chewing gum sheet.

10. The method or system of claim 1 or claim 7, wherein said height of said gap is 40% to 90% of said thickness of said chewing gum sheet.

11. The system of claim 7, further including:
at least one chewing gum cutting device disposed downstream of said at least one forming device and being configured to separate said at least one chewing gum sheet into a plurality of chewing gum sheets each including said at least one printable surface;
a de-dusting device disposed between said cutting device and said print roller, said de-dusting device being configured to remove at least a substantial amount of powdered anti sticking agent from said at least one printable surface of each of said plurality of sheets, said anti sticking agent having been applied to said chewing gum composition at or upstream of said at least one forming device;
a resurfacing device disposed between said de-dusting device and said print roller, said resurfacing device being configured to resurface at least one printable surface of each of said plurality of chewing gum sheets;
a scoring device downstream of said printer;
a stacking device disposed downstream of said printer and configured to stack each of said plurality of chewing gum sheets on individual trays; and
a further cutting device configured to separate at least one of said chewing gums sheets into chewing gum pieces for packaging of said chewing gum pieces downstream of said stacking;
wherein said resurfacing device is optionally configured to remove topological variations located on said at least one printable surface of each of said plurality of chewing gum sheets.

12. The system of claim 11, wherein said at least one printable surface of each of said plurality of chewing gum sheets is a first printable surface and an opposing second printable surface, said first surface being printed on at said printer, the system further including:
a flipping device disposed between said printer and said scoring device and configured to flip each of said plurality of chewing gum sheets;
a second resurfacing device disposed between said flipping device and said scoring device and configured to resurface said second printable surface opposite said first printable surface of each of said plurality of chewing gum sheets downstream of said flipping device; and
a second print roller disposed between said second resurfacing device and said scoring device and configured to print further indicia on at least a portion of said second printable surface of each of said plurality of chewing gum sheets.

13. The system of claim 12, further including:
a buffer device disposed between said second print roller and said scoring device and configured to disrupt transport of each of said plurality of chewing gum sheets from said second print roller to said scoring device for a desirable amount of time, wherein said first printable surface and said second printable surface are allowed to dry in said buffer device over said desirable amount of time.

14. The system of claim 12, further including at least one inspection device disposed downstream of at least one of said first printer and said second printer, said at least one inspection device being configured to inspect at least one of said first printable surface and said second printable surface for print quality on at least one of said plurality of sheets.

15. The system of claim 7, wherein said gap is adjustable to allow said thickness of said at least one chewing gum sheet to be greater than said height of said gap.

## Patentansprüche

1. Verfahren zum Auftragen eines Drucks auf wenigstens eine Kaugummioberfläche, wobei das Verfahren umfasst:
Formen einer Kaugummizusammensetzung zu wenigstens einem Kaugummibogen, der wenigstens eine bedruckbare Oberfläche aufweist, wobei der Kaugummibogen eine gewünschte Dicke aufweist;
Bereitstellen einer Druckwalze;
Transportieren des wenigstens einen Kaugummibogens über eine Transportfläche zu der Druckwalze;
Bereitstellen eines Spalts zwischen der Druckwalze und der Transportfläche, wobei die Dicke des wenigstens einen Kaugummibogens größer als die Höhe des Spalts ist;
Bewegen des wenigstens einen Kaugummibogens durch den Spalt;
Drucken von Zeichen auf den Kaugummibogen mittels der Druckwalze während des Bewegens des wenigstens einen Kaugummibogens durch den Spalt; und
Zusammendrücken des wenigstens einen Kaugummibogens während des Bewegens des wenigstens einen Kaugummibogens durch den Spalt, wobei das Zusammendrücken gleichzeitig mit dem Drucken stattfindet.

2. Verfahren nach Anspruch 1, ferner umfassend:
dem Formen vorgelagertes Einstäuben einer Kaugummizusammensetzung mit einem pulverisierten Antihaftmittel dem Formen vorgelagert;
Trennen des wenigstens einen Kaugummibogens in eine Vielzahl von Kaugummibögen, die jeweils die wenigstens eine bedruckbare Oberfläche aufweisen;
Transportieren der Vielzahl von Kaugummibögen serienweise zu einer Entstaubungsvorrichtung, die zwischen dem Formen und dem Drucken angeordnet ist;
Entfernen wenigstens einer wesentlichen Menge des pulverisierten Antihaftmittels von der wenigstens einen bedruckbaren Oberfläche jedes der Vielzahl von Bögen über die Entstaubungsvorrichtung;
Transportieren der Vielzahl von Kaugummibögen serienweise zu einer Oberflächenerneuerungsvorrichtung, die zwischen der Entstaubungsvorrichtung und dem Drucken angeordnet ist;
Oberflächenerneuern der wenigstens einen bedruckbaren Oberfläche jeder der Vielzahl von Kaugummibögen über die Oberflächenerneuerungsvorrichtung;
Einkerben der Vielzahl von Kaugummibögen über eine Einkerbvorrichtung, die dem Drucken nachgelagert angeordnet ist;
Stapeln jedes der Vielzahl von Kaugummibögen auf einzelnen Tabletts; und
Trennen wenigstens eines der Kaugummibögen in Kaugummistücke, um die Kaugummistücke dem Stapeln nachgelagert zu verpacken;
wobei das Oberflächenerneuern der Oberfläche optional das Verringern topologischer Schwankungen umfasst, die sich auf der wenigstens einen bedruckbaren Oberfläche jedes der Vielzahl von Kaugummibögen befinden.

3. Verfahren nach Anspruch 2, wobei die wenigstens eine bedruckbare Oberfläche jedes der Vielzahl von Kaugummibögen eine erste bedruckbare Oberfläche und eine gegenüberliegende zweite bedruckbare Oberfläche ist, wobei die erste Oberfläche auf dem Drucker bedruckt wird, wobei das Verfahren ferner umfasst:
Transportieren der Vielzahl von Kaugummibögen von der Druckwalze zu einer Wendevorrichtung;
Wenden jedes der Vielzahl von Kaugummibögen mittels der Wendevorrichtung;
Transportieren der Vielzahl von Kaugummibögen serienweise zu einer zweiten Oberflächenerneuerungsvorrichtung;
Oberflächenerneuern der zweiten bedruckbaren Oberfläche jedes der Vielzahl von Kaugummibögen mittels der zweiten Oberflächenerneuerungsvorrichtung;
Transportieren der Vielzahl von Kaugummibögen zu einer zweiten Druckwalze; und
Drucken weiterer Zeichen auf wenigstens einen Abschnitt der zweiten bedruckbaren Oberfläche jedes der Vielzahl von Kaugummibögen bei der zweiten Druckwalze.

4. Verfahren nach Anspruch 3, ferner umfassend:
Transportieren der Vielzahl von Kaugummibögen von der zweiten Druckwalze; Unterbrechen des Transportierens von der zweiten Druckwalze mittels einer Puffervorrichtung für eine gewünschte Zeitdauer;
Trocknenlassen der Zeichen und der weiteren Zeichen durch das Unterbrechen; und
transportieren der Vielzahl von Gummibögen von der Puffervorrichtung zu der Einkerbvorrichtung nach der gewünschten Zeitdauer.

5. Verfahren nach Anspruch 3, ferner umfassend das Untersuchen der ersten bedruckbaren Oberfläche und/oder der zweiten bedruckbaren Oberfläche hinsichtlich Druckqualität an wenigstens einem der Vielzahl von Bögen und das Zurückweisen oder Annehmen wenigstens eines der Vielzahl von Bögen auf der Grundlage von Ergebnissen der Untersuchung enthält.

6. Verfahren nach Anspruch 1, ferner umfassend das Einstellen der Höhe des Spalts enthält, um zu ermöglichen, dass die Dicke des wenigstens einen Kaugummibogens größer als die Höhe des Spalts ist.

7. System zum Auftragen eines Drucks auf wenigstens eine Kaugummioberfläche, wobei das System umfasst:
wenigstens eine Formvorrichtung, die zum Formen einer Kaugummizusammensetzung zu wenigstens einem Kaugummibogen konfiguriert ist, welcher eine gewünschte Dicke und wenigstens eine bedruckbare Oberfläche aufweist;
eine Druckwalze, die zum Drucken von Zeichen auf die wenigstens eine bedruckbare Oberfläche konfiguriert ist;
eine Transportfläche, die dafür konfiguriert ist, den wenigstens einen Kaugummibogen der Druckwalze zuzuführen; und
einen Spalt zwischen der Druckwalze und der Transportfläche, wobei der Spalt eine geringere Höhe als die gewünschte Dicke des wenigstens einen Kaugummibogens auf der Transportfläche aufweist,
wobei die geringere Höhe ermöglicht, dass der Spalt den wenigstens einen Kaugummibogen gleichzeitig mit dem Drucken der Zeichen durch die Druckwalze zusammendrückt.

8. Verfahren oder System nach Anspruch 1 oder Anspruch 7, wobei die Höhe des Spalts weniger als oder gleich 90 % der Dicke des Kaugummibogens beträgt.

9. Verfahren oder System nach Anspruch 1 oder Anspruch 7, wobei die Höhe des Spalts wenigstens 40 % der Dicke des Kaugummibogens beträgt.

10. Verfahren oder System nach Anspruch 1 oder Anspruch 7, wobei die Höhe des Spalts 40 % bis 90 % der Dicke des Kaugummibogens beträgt.

11. System nach Anspruch 7, ferner umfassend:
wenigstens eine Kaugummitrennvorrichtung, die der wenigstens einen Formvorrichtung nachgelagert angeordnet ist und dafür konfiguriert ist, den wenigstens einen Kaugummibogen in eine Vielzahl von Kaugummibögen zu teilen, die jeweils die wenigstens eine bedruckbare Oberfläche aufweisen;
eine Entstaubungsvorrichtung, die zwischen der Trennvorrichtung und der Druckwalze angeordnet ist, wobei die Entstaubungsvorrichtung dafür konfiguriert ist, wenigstens eine wesentliche Menge eines pulverisierten Antihaftmittels von der wenigstens einen bedruckbaren Oberfläche jedes der Vielzahl von Bögen zu entfernen, wobei das Antihaftmittel bei der oder vorgelagert zu der wenigstens einen Formvorrichtung auf die Kaugummizusammensetzung aufgetragen wurde;
eine Oberflächenerneuerungsvorrichtung, die zwischen der Entstaubungsvorrichtung und der Druckwalze angeordnet ist, wobei die Oberflächeherneuerungsvorrichtung dafür konfiguriert ist, wenigstens eine bedruckbare Oberfläche jedes der Vielzahl von Kaugummibögen oberflächehzuerneuern;
eine dem Drucker nachgelagerte Einkerbvorrichtung;
eine Stapelvorrichtung, die dem Drucker nachgelagert angeordnet ist und dafür konfiguriert ist, jeden der Vielzahl von Kaugummibögen auf einzelnen Tabletts zu stapeln; und
eine weitere Trennvorrichtung, die dafür konfiguriert ist, wenigstens einen der Kaugummibögen in Kaugummistücke zu teilen, um die Kaugummistücke zu verpacken, dem Stapeln nachgelagert;
wobei die Oberflächenerneuerungsvorrichtung optional dafür konfiguriert ist, topologische Schwankungen zu entfernen, die sich auf der wenigstens einen bedruckbaren Oberfläche jedes der Vielzahl von Kaugummibögen befinden.

12. System nach Anspruch 11, wobei die wenigstens eine bedruckbare Oberfläche jedes der Vielzahl von Kaugummibögen eine erste bedruckbare Oberfläche und eine gegenüberliegende zweite bedruckbare Oberfläche ist, wobei die erste Oberfläche auf dem Drucker bedruckt wird, wobei das System ferner umfasst:
eine Wendevorrichtung, die zwischen dem Drucker und der Einkerbvorrichtung angeordnet ist und zum Wenden jedes der Vielzahl von Kaugummibögen konfiguriert ist;
eine zweite Oberflächenerneuerungsvorrichtung, die zwischen der Wendevorrichtung und der Einkerbvorrichtung angeordnet ist und konfiguriert ist zum Oberflächenerneuern der, der ersten bedruckbaren Oberfläche gegenüberliegenden, zweiten bedruckbaren Oberfläche jedes der Vielzahl von Kaugummibögen, der Wendevorrichtung nachgelagert; und
eine zweite Druckwalze, die zwischen der zweiten Oberflächenerneuerungsvorrichtung und der Einkerbvorrichtung angeordnet ist und zum Drucken weiterer Zeichen wenigstens auf einen Abschnitt der zweiten bedruckbaren Oberfläche jedes der Vielzahl von Kaugummibögen konfiguriert ist.

13. System nach Anspruch 12, das ferner enthält:
eine Puffervorrichtung, die zwischen der zweiten Druckwalze und der Einkerbvorrichtung angeordnet und konfiguriert ist, um den Transport jedes der Vielzahl von Kaugummibögen von der zweiten Druckwalze zu der Einkerbvorrichtung für eine gewünschte Zeitdauer zu unterbrechen, wobei die erste bedruckbare Oberfläche und die zweite bedruckbare Oberfläche in der Puffervorrichtung über die gewünschte Zeitdauer trocknen gelassen werden.

14. System nach Anspruch 12, das ferner wenigstens eine Untersuchungsvorrichtung aufweist, die dem ersten Drucker nachgelagert und/oder dem zweiten Drucker nachgelagert angeordnet ist, wobei die wenigstens eine Untersuchungsvorrichtung dafür konfiguriert ist, die erste bedruckbare Oberfläche und/oder die zweite bedruckbare Oberfläche hinsichtlich Druckqualität auf wenigstens einem der Vielzahl von Bögen zu untersuchen.

15. System nach Anspruch 7, wobei der Spalt einstellbar ist, um zu ermöglichen, dass die Dicke des wenigstens einen Kaugummibogens größer als die Höhe des Spalts ist.

## Revendications

1. Procédé d'application d'impression sur au moins une surface de gomme à mâcher, le procédé comprenant :
la formation d'une composition de gomme à mâcher dans au moins une feuille de gomme à mâcher ayant au moins une surface imprimable, ladite feuille de gomme à mâcher ayant une épaisseur souhaitable ;
la fourniture d'un rouleau d'impression ;
l'acheminement de ladite au moins une feuille de gomme à mâcher vers ledit rouleau d'impression grâce à une surface d'acheminement ;
la fourniture d'un espace entre ledit rouleau d'impression et ladite surface d'acheminement, ladite épaisseur de ladite au moins une feuille de gomme à mâcher étant supérieure à une hauteur dudit espace ;
le déplacement de ladite au moins une feuille de gomme à mâcher à travers ledit espace ; et
l'impression d'indications sur ladite feuille de gomme à mâcher grâce audit rouleau d'impression au cours dudit déplacement de ladite au moins une feuille de gomme à mâcher à travers ledit espace ; et
la compression de ladite au moins une feuille de gomme à mâcher au cours dudit déplacement de ladite au moins une feuille de gomme à mâcher à travers ledit espace, ladite compression survenant simultanément avec ladite impression.

2. Procédé selon la revendication 1, incluant en outre :
le saupoudrage d'une composition de gomme à mâcher avec un agent antiadhérant en poudre en amont de ladite mise en forme ;
la découpe de ladite au moins une feuille de gomme à mâcher en une pluralité de feuilles de gomme à mâcher incluant ladite au moins une surface imprimable ;
l'acheminement de ladite pluralité de feuilles de gomme à mâcher en série vers un dispositif d'enlèvement de poudre disposé entre ladite mise en forme et ladite impression ;
l'enlèvement d'au moins une quantité sensible dudit agent anti-adhérent en poudre de ladite au moins une surface imprimable de chacune de ladite pluralité de feuilles grâce audit dispositif d'enlèvement de poudre ;
l'acheminement de ladite pluralité de feuilles de gomme à mâcher en série vers un dispositif de resurfaçage disposé entre ledit dispositif d'enlèvement de poudre et ladite impression ;
le resurfaçage de ladite au moins une surface imprimable de chacune de ladite pluralité de feuilles de gomme à mâcher grâce audit dispositif de resurfaçage ;
le rainage de ladite pluralité de feuilles de gomme à mâcher grâce à un dispositif de rainage disposé en aval de ladite impression ;
l'empilement de chacune de ladite pluralité de feuilles de gomme à mâcher sur des plateaux individuels ; et
la découpe d'au moins l'une desdites feuilles de gommes à mâcher en morceaux de gomme à mâcher pour emballage desdits morceaux de gomme à mâcher en aval dudit empilement ;
dans lequel ledit resurfaçage inclut éventuellement la réduction d'irrégularités topologiques situées sur ladite au moins une surface imprimable de chacune de ladite pluralité de feuilles de gomme à mâcher.

3. Procédé selon la revendication 2, dans lequel ladite au moins une surface imprimable de chacune de ladite pluralité de feuilles de gomme à mâcher est une première surface imprimable et une seconde surface imprimable opposée, ladite première surface étant imprimée sur ladite imprimante, le procédé incluant en outre :
l'acheminement de ladite pluralité de feuilles de gomme à mâcher dudit rouleau d'impression vers un dispositif de retournement ;
le retournement de chacune de ladite pluralité de feuilles de gomme à mâcher grâce audit dispositif de retournement ;
l'acheminement de ladite pluralité de feuilles de gomme à mâcher en série vers un second dispositif de resurfaçage ;
le resurfaçage de ladite seconde surface imprimable de chacune de ladite pluralité de feuilles de gomme à mâcher grâce audit second dispositif de resurfaçage ;
l'acheminement de ladite pluralité de feuilles de gomme à mâcher vers un second rouleau d'impression ; et
l'impression d'autres indications sur au moins une partie de ladite seconde surface imprimable de chacune de ladite pluralité de feuilles de gomme à mâcher au niveau dudit second rouleau d'impression.

4. Procédé selon la revendication 3, incluant en outre :
l'acheminement de ladite pluralité de feuilles de gomme à mâcher à partir dudit second rouleau d'impression ; l'interruption dudit acheminement à partir dudit second rouleau d'impression grâce à un dispositif tampon pendant une quantité de temps souhaitable ;
la possibilité de séchage desdites indications et desdites autres indications grâce à ladite interruption ; et
l'acheminement de ladite pluralité de feuilles de gomme dudit dispositif tampon vers ledit dispositif de rainage après ladite quantité de temps souhaitable.

5. Procédé selon la revendication 3, incluant en outre l'inspection d'au moins l'une de ladite première surface imprimable et de ladite seconde surface imprimable pour vérifier la qualité d'impression sur au moins l'une de ladite pluralité de feuilles, et le rejet ou l'acceptation d'au moins l'une de ladite pluralité de feuilles sur la base des résultats de ladite inspection.

6. Procédé selon la revendication 1, incluant en outre l'ajustement de ladite hauteur dudit espace pour permettre à ladite épaisseur de ladite au moins une feuille de gomme à mâcher d'être supérieure à ladite hauteur dudit espace.

7. Système pour appliquer une impression à au moins une surface de gomme à mâcher, le système comprenant :
au moins un dispositif de mise en forme configuré pour mettre en forme une composition de gomme à mâcher en au moins une feuille de gomme à mâcher ayant une épaisseur souhaitable et au moins une surface imprimable ;
un rouleau d'impression configuré pour imprimer des indications sur ladite au moins une surface imprimable ;
une surface d'acheminement configurée pour transférer ladite au moins une feuille de gomme à mâcher vers ledit rouleau d'impression ; et
un espace entre ledit rouleau d'impression et ladite surface d'acheminement, ledit espace incluant une hauteur inférieure à ladite épaisseur souhaitable de ladite au moins une feuille de gomme à mâcher sur ladite surface d'acheminement,
dans lequel ladite hauteur inférieure permet audit espace de comprimer ladite au moins une feuille de gomme à mâcher simultanément à l'impression desdites indications par ledit rouleau d'impression.

8. Procédé ou système selon la revendication 1 ou la revendication 7, dans lequel ladite hauteur dudit espace est inférieure ou égale à 90 % de ladite épaisseur de ladite feuille de gomme à mâcher.

9. Procédé ou système selon la revendication 1 ou la revendication 7, dans lequel ladite hauteur dudit espace représente au moins 40 % de ladite épaisseur de ladite feuille de gomme à mâcher.

10. Procédé ou système selon la revendication 1 ou la revendication 7, dans lequel ladite hauteur dudit espace représente 40 % à 90 % de ladite épaisseur de ladite feuille de gomme à mâcher.

11. Système selon la revendication 7, incluant en outre :
au moins un dispositif de découpe de la gomme à mâcher disposé en aval dudit au moins un dispositif de mise en forme et étant configuré pour séparer ladite au moins une feuille de gomme à mâcher en une pluralité de feuilles de gomme à mâcher, chacune incluant ladite au moins une surface imprimable ;
un dispositif d'enlèvement de poudre disposé entre ledit dispositif de découpe et ledit rouleau d'impression, ledit dispositif d'enlèvement de poudre étant configuré pour enlever au moins une quantité sensible d'agent anti-adhérent en poudre de ladite au moins une surface imprimable de chacune de ladite pluralité de feuilles, ledit agent anti-adhérent ayant été appliqué à ladite composition de gomme à mâcher au niveau ou en aval dudit au moins un dispositif de mise en forme ;
un dispositif de resurfaçage disposé entre ledit dispositif d'enlèvement de poudre et ledit rouleau d'impression, ledit dispositif de resurfaçage étant configuré pour resurfacer au moins une surface imprimable de chacune de ladite pluralité de feuilles de gomme à mâcher ;
un dispositif de rainage en aval de ladite imprimante ;
un dispositif d'empilement disposé en aval de ladite imprimante et configuré pour empiler chacune de ladite pluralité de feuilles de gomme à mâcher sur des plateaux individuels ; et
un autre dispositif de découpe configuré pour séparer au moins l'une desdites feuilles de gommes à mâcher en morceaux de gomme à mâcher pour emballage desdits morceaux de gomme à mâcher en aval dudit empilement ;
dans lequel ledit dispositif de resurfaçage est éventuellement configuré pour supprimer les irrégularités topologiques situées sur ladite au moins une surface imprimable de chacune de ladite pluralité de feuilles de gomme à mâcher.

12. Système selon la revendication 11, dans lequel ladite au moins une surface imprimable de chacune de ladite pluralité de feuilles de gomme à mâcher est une première surface imprimable et une seconde surface imprimable opposée, ladite première surface étant imprimée au niveau de ladite imprimante, le système incluant en outre :
un dispositif de retournement disposé entre ladite imprimante et ledit dispositif de rainage et configuré pour retourner chacune de ladite pluralité de feuilles de gomme à mâcher ;
un second dispositif de resurfaçage disposé entre ledit dispositif de retournement et ledit dispositif de rainage et configuré pour resurfacer ladite seconde surface imprimable opposée à ladite première surface imprimable de chacune de ladite pluralité de feuilles de gomme à mâcher en aval dudit dispositif de retournement ; et
un second rouleau d'impression disposé entre ledit second dispositif de resurfaçage et ledit dispositif de rainage et configuré pour imprimer d'autres indications sur au moins une partie de ladite seconde surface imprimable de chacune de ladite pluralité de feuilles de gomme à mâcher.

13. Système selon la revendication 12, incluant en outre :
un dispositif tampon disposé entre ledit second rouleau d'impression et ledit dispositif de rainage et configuré pour interrompre l'acheminement de chacune de ladite pluralité de feuilles de gomme à mâcher dudit second rouleau d'impression vers ledit dispositif de rainage pendant une quantité de temps souhaitable, dans lequel on laisse sécher ladite première surface imprimable et ladite seconde surface imprimable dans ledit dispositif tampon pendant ladite quantité de temps souhaitable.

14. Système selon la revendication 12, incluant en outre au moins un dispositif d'inspection disposé en aval d'au moins l'une de ladite première imprimante et de ladite seconde imprimante, ledit au moins un dispositif d'inspection étant configuré pour inspecter au moins l'une de ladite première surface imprimable et de ladite seconde surface imprimable pour vérifier la qualité d'impression sur au moins l'une de ladite pluralité de feuilles.

15. Système selon la revendication 7, dans lequel ledit espace est ajustable pour permettre à ladite épaisseur de ladite au moins une feuille de gomme à mâcher d'être plus grande que ladite hauteur dudit espace.
